(19)

Europäisches
Patentamt
European
Patent Office
Office européen
des brevets

(11) **EP 1 213 907 B1**

(12) **EUROPEAN PATENT SPECIFICATION**

(45) Date of publication and mention
of the grant of the patent:
**18.05.2011 Bulletin 2011/20**

(51) Int Cl.:
**H04M 19/00** *(2006.01)*

(21) Application number: **01000734.2**

(22) Date of filing: **10.12.2001**

(54) **switched mode current feed methods for telephony subcriber loops**

Schaltnetzteil-Stromversorgungsverfahren für telefon-Teilnehmerleitungen

Alimentation de courant en mode commute pour lignes telephoniques d'abonnees

(84) Designated Contracting States:
**AT BE CH CY DE DK ES FI FR GB GR IE IT LI LU MC NL PT SE TR**

(30) Priority: **11.12.2000 US 254779 P**

(43) Date of publication of application:
**12.06.2002 Bulletin 2002/24**

(73) Proprietor: **TEXAS INSTRUMENTS INC.**
**Dallas,**
**Texas 75251 (US)**

(72) Inventor: **Karnad, Ravindra**
**560075 Bangalore (IN)**

(74) Representative: **Holt, Michael et al**
**Texas Instruments Limited**
**European Patents Department**
**800 Pavilion Drive**
**Northampton NN4 7YL (GB)**

(56) References cited:
**EP-A- 0 693 846       EP-A2- 0 450 884**
**US-A- 4 357 495       US-A- 4 538 032**
**US-A- 4 674 119**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the Invention

1. Field of the Invention

This invention relates generally to telephony subscriber loops, and more particularly to a switched mode current feed technique to implement a subscriber line interface circuit (SLIC).

2. Description of the Prior Art

The subscriber line interface circuit (SLIC) is being used in the central off (CO) as well as the PBX environment to interface standard telephones, fax equipment, modems, answering machines, and the like. With the advent of voice-over Internet Protocol (VoIP), cable modems (CM) now offer voice telephone services and the SLIC is now resident in the subscriber's premises itself. The evolving standard recommends four telephony connections (i.e. 4 SLICs) in every cable modem.

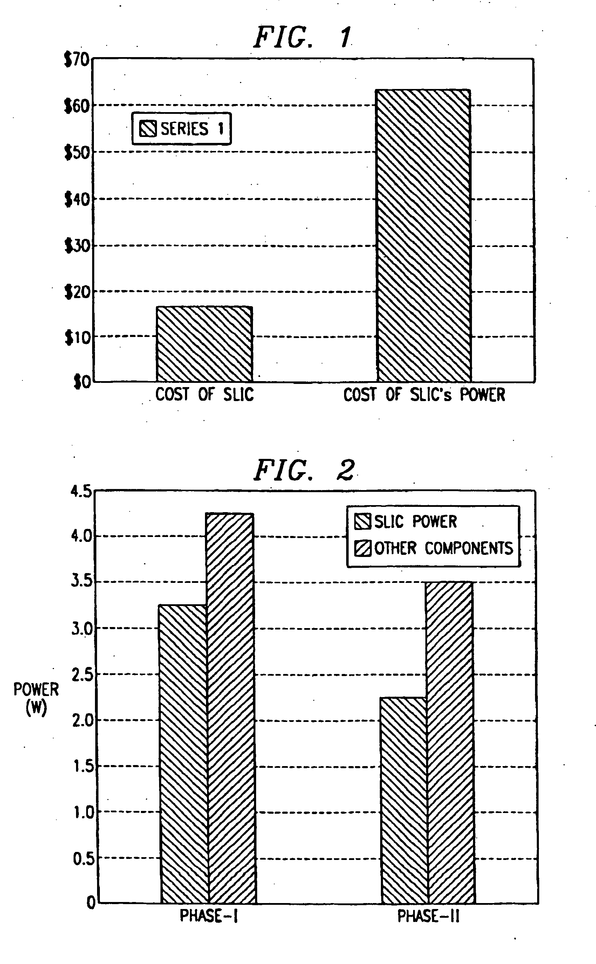

On of the most important functions of the SLIC, whether in the CO or the CM or any other VoIP environment (like voice over DSL) is "Battery feed" which is nothing but feeding DC power over the telephone cable to the legacy telephone devices. There have been many methods of doing this in the CO environment. Unlike the CO, however, in the CM environment, power consumption is a key factor to consider since the cable must feed power to all the devices (e.g., RF tuner, DSP, analog front-end, etc.) within the CM. It is estimated that infrastructure cost is about $20 for every 1 Watt of power that is to be delivered. Present day SLICs, if used as such, could consume as much as 4x2.5W=10W (for all lines active). The better ones consume 4x0.8W=3.2W. While the cost of SLICs is in the range of 4x$4=$16, the cost of the power infrastructure will be an enormous 3.2x$20=$64, as depicted in Figure 1. This cost will eventually have to absorbed by the consumer in terms of higher monthly usage charges.

Importantly, the SLIC dominates the consumption of power in the cable modem. Further, the SLIC has never been viewed with the intention of reducing power, since they have traditionally been deployed in the CO and PBX environments. In these environments, the total power consumption is not dominated by the SLIC power. In the CM environment, however, the situation is very much different, as can be seen from Figure 2. Figure 2 illustrates that the SLIC is the single largest power consumer in a cable modem. The data presented herein above demonstrates that every 100mW of power saved translates into a saving of $2 in power cost.

In view of the foregoing, a need exists for a low power SLIC in order to bring down costs associated with the cable modem.

European patent application EP0450884, describes a SLIC providing regulated current to a telephone subscriber, whereby current to the telephone subscriber flows through a switching transistor, inductive storage element, sensing resistors and a hybrid transformer.

Summary of the Invention

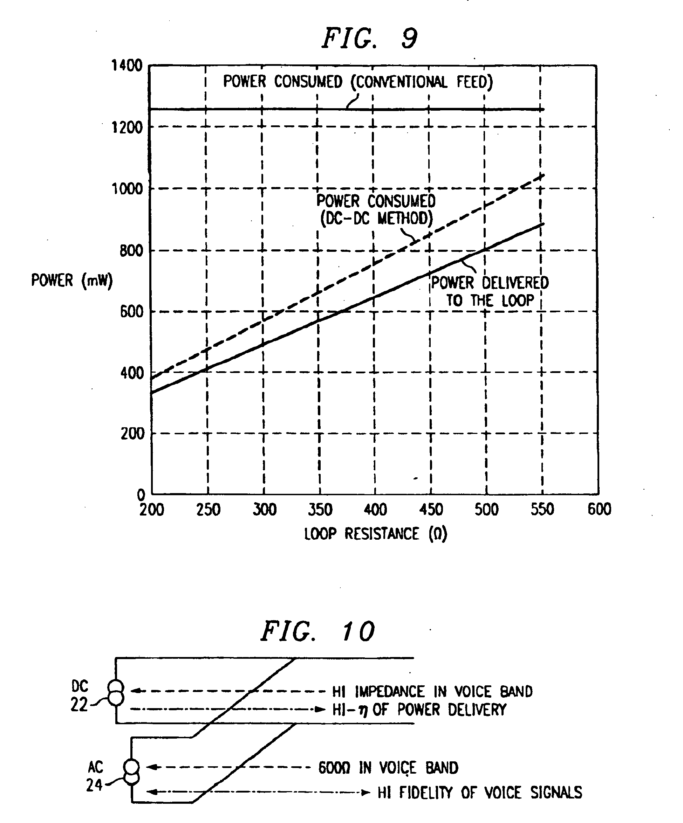

To meet the above and other objectives, the present invention is directed to a low power SLIC that is particularly useful in bringing down costs associated with cable modems used to implement voice telephony services. In the subscriber loop, the loop current has a DC as well as an AC component. The DC component (DC loop current) performs the function of delivering power to the telephone. The AC comp0nent is the speech signal. The power levels however, are vastly different: The DC power is a few hundred milliwatts, whereas the AC power is just a few milliwatts. It is the DC current feed then, which must be made efficient if one intends to make power feed efficient. At the same time, such an implementation must not disturb the performance of the AC voice band signals. One embodiment of the low power SLIC is implemented by having two current sources in parallel (one high efficiency, the other high fidelity) as illustrated by Figure 10. The DC current source has high efficiency and a high impedance in the voice band, while the AC current source synthesizes a 600 Ohm (typical) termination and does the high fidelity speech transmit and receiving (hybrid) functions. The DC current source then is optimized for efficiency while the AC current source is optimized for fidelity (voice band performance). The DC current source is implemented using switched-mode techniques.

According to a first aspect of the invention there is provided a switched mode current boost converter as set forth in the appended claims.

In another aspect of the invention, a subscriber line interface circuit is implemented using a switched-mode technique to provide a constant current source having high efficiency and that presents a high-impedance to the voice band signals.

According to a further aspect of the invention, a subscriber device comprising the scriber loop interface circuit is provided as set forth in the appended claims.

Brief Description of the Drawings

Other aspects and features of the present invention and many of the attendant advantages of the present invention will be readily appreciated as the same become better understood by reference to the following detailed description when considered in connection with the accompanying drawings in which like reference numerals designate like parts throughout the figures thereof and wherein:

Figure 1 is a diagram illustrating subscriber line interface circuit costs in a cable modem;

Figure 2 is a diagram illustrating subscriber line interface circuit power consumption in a cable modem;

Figure 3 is a diagram illustrating a rough approximation of EIA-470 standard limits associated with telephone characteristics;

Figure 4 is a diagram illustrating Bellcore TA909 limits for voltage-current characteristics;

Figure 5 is a diagram illustrating off-hook constant current battery feed characteristics associated with a subscriber line interface circuit;

Figure 6 is a simplified schematic diagram illustrating a current feed associated with a subscriber line interface circuit;

Figure 7 is a diagram illustrating SLIC power dissipation for different loop lengths;

Figure 8 is a diagram illustrating efficiency of power feed associated with a subscriber line interface circuit for different loop lengths and loop currents;

Figure 9 is a diagram illustrating the power advantage in using the DC-DC converter approach versus a conventional battery feed for a subscriber line interface circuit;

Figure 10 is a simplified diagram illustrating a DC current source in parallel with an AC current source associated with a subscriber line interface circuit according to one embodiment of the present invention;

Figure 11 is a simplified schematic diagram illustrating a voltage buck converter that is known in the prior art;

Figure 12 is a simplified schematic diagram illustrating a voltage boost converter that is known in the prior art;

Figure 13 is a simplified schematic diagram illustrating a voltage buck-boost converter that is known in the prior art;

Figure 14 is a simplified schematic diagram illustrating a voltage boost converter and its dual current boost converter;

Figure 15 is a simplified schematic diagram illustrating two states of the current boost converter depicted in Figure 14;

Figure 16 is a diagram illustrating capacitor current and voltage waveforms for the current boost converter depicted in Figure 14;

Figure 17 is a schematic diagram illustrating a current boost converter according to one embodiment of the present invention;

Figure 18 is a simplified schematic diagram illustrating simple L-C filter implemented to reduce voltage fluctuations across a load;

Figure 19 is a simplified schematic diagram illustrating a switched-mode current-to-voltage trans-converter circuit;

Figure 20 is a schematic diagram illustrating the two states (charge/discharge) of the switched-mode current-to-voltage trans-converter circuit depicted in Figure 19;

Figure 21 is a schematic diagram illustrating the Norton and Thevenin equivalent circuits of the switched-mode current-to-voltage trans-converter circuit depicted in Figure 19 for its charging stage;

Figure 22 is a diagram illustrating capacitor charging/discharging waveforms and ripple for the switched-mode current-to-voltage trans-converter circuit depicted in Figure 19;

Figure 23 is a schematic diagram illustrating a switched-mode current-to-voltage trans-converter circuit according to one embodiment of the present invention;

Figure 24 is a schematic diagram illustrating a simple L-C filter implemented to reduce current fluctuations across a load;

Figure 25 is a simplified schematic diagram illustrating a switched-mode voltage-to-current trans-converter;

Figure 26 is a diagram illustrating the two states (charge/discharge) of the switched-mode voltage-to-current trans-converter depicted in Figure 25;

Figure 27 is a simplified schematic diagram illustrating charging of the inductor by the voltage source for the switched-mode voltage-to-current trans-converter depicted in Figure 25;

Figure 28 is a diagram illustrating an inductor charging waveform associated with the switched-mode voltage-to-current trans-converter depicted in Figure 25;

Figure 29 is a schematic diagram illustrating a switched-mode voltage-to-current trans-converter according to one embodiment of the present invention;

Figure 30 illustrates an output current waveform associated with the switched-mode voltage-to-current trans-converter depicted in Figure 29; and

Figure 31 is a waveform diagram illustrating output current ripple for the switched-mode voltage-to-current trans-converter depicted in Figure 29.

While the above-identified drawing figures set forth particular embodiments, other embodiments of the present invention are also contemplated, as noted in the discussion. Numerous other modifications and embodiments can be devised by those skilled in the art which fall within the scopeof this invention as claimed.

Detailed Description of the Preferred Embodiments

The present invention is best understood by first providing a detailed discussion regarding DC power requirements of the telephone, efficiency of power feed from a subscriber line interface circuit, and the cost of wasted power associated with a particular subscriber loop. DC power requirements are considered first as set forth herein below.

DC Power Requirements of the Telephone

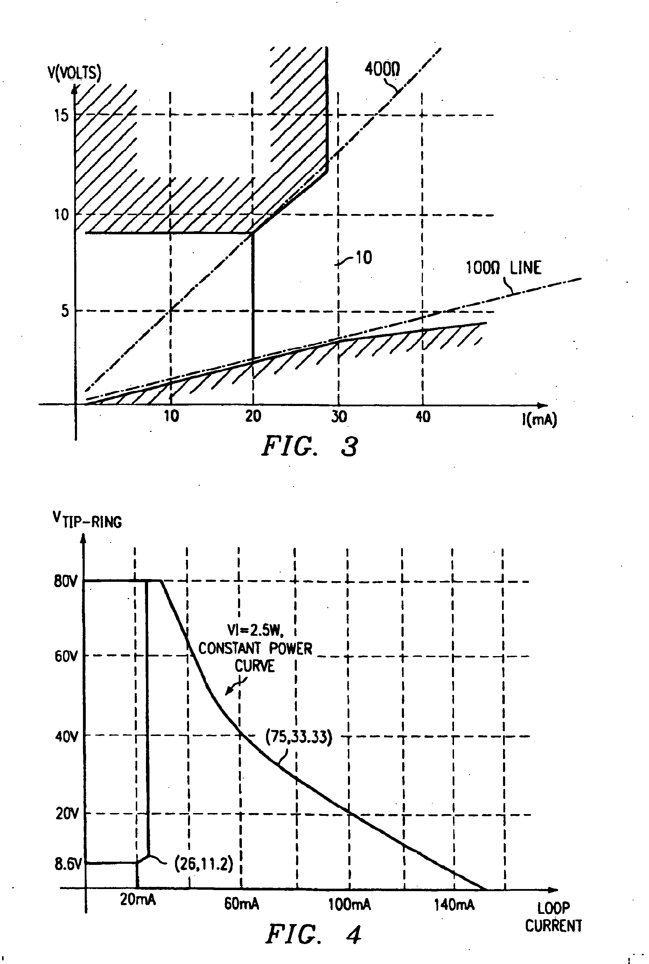

One of the primary functions of the SLIC is to feed DC power to the legacy telephone instruments. Decades ago, the early generation telephones used the loop current (typically 30mA or more) to power the carbon microphones. Present day speech circuit IC's require much less current and 20mA is considered more than sufficient for satisfactory operation of electronic phones. The DC V-I characteristics of phones are non-linear, but are expected to meet the characteristics of the EIA-470 standard, which is graphically shown in Figure 3 (only for currents below 40mA). Important issues related to this standard include: 1) performance of telephones is not guaranteed for currents below 20mA; 2) 400 Ohms is the maximum resistance that a phone can have in the range of 20mA to 30mA; and 3) 100 Ohms is the minimum resistance that a phone can have in the range of 20mA to 30mA. For purposes of loop current estimation and design of battery feed arrangements therefore, it is assumed that phones have a resistance of between 100 Ohms and 400 Ohms in the current range of 20mA to 30mA.

The SLIC must now power up the phone to make it operate in this trapezoidal region 10. This can be done either with a voltage source or a current source. Either way, the V-I characteristics of the source must fall within the Bellcore limits shown in Figure 4. A current source is preferred because of its inherent short-circuit protection (the value of current being between 20mA and 30mA). In the case of a cable modem, a loop current of 20mA can be chosen. In this case, operation of the telephone is restricted to the vertical line at 20mA between the 100 Ohm and 400 Ohm resistance lines shown in Figure 3. Power consumption, among other things, can now be examined for this limited region of operation.

Efficiency of Power Feed From SLIC

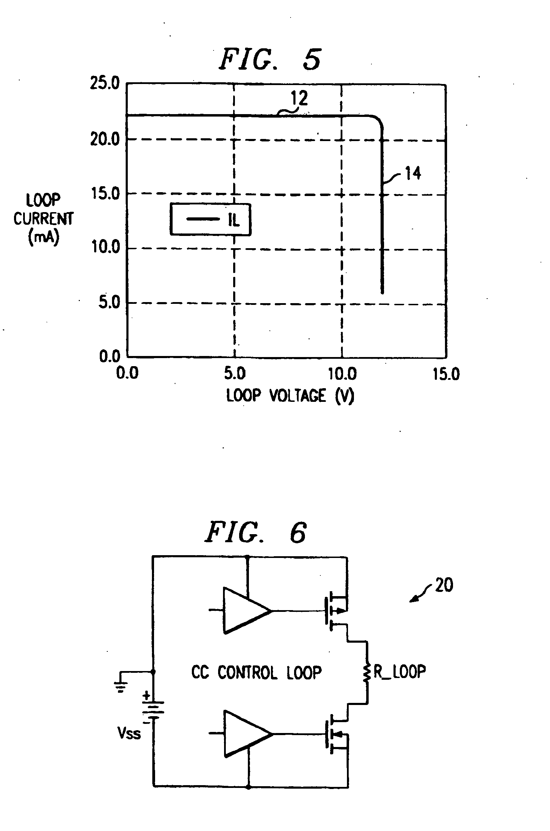

Figure 5 is a diagram illustrating off-hook constant current (CC) battery feed V-I characteristics associated with a subscriber line interface circuit subject to the conditions set forth herein before. This characteristic can be seen to have two distinct regions: the constant current (CC) region 12, and the voltage limiting (VL) region 14 (where the current drops). If the source has such a characteristic and the telephone has the characteristics shown in Figures 3 and 4, the phone by itself, when connected to such a source will get biased in the CC region. When a resistance (representing the line/loop resistance) is placed in series however, then the operating point could well be in the VL region 14, depending on the value of resistance. The longer the loop, the larger the loop voltage, and hence as the line resistance increases, the operating point moves from the CC region 12 towards the right to the VL region 14. The source is designed to operate in the CC region 12 for all values of loop length that is to be served. In the case of the cable modem, the maximum value of line resistance is about 16 Ohms (corresponding to the maximum loop length of 150 meters or 500 feet of AWG 22 wire). Adding to this the following:

1) maximum telephone resistance of 400 Ohms; 2) the standard IEEE home wiring resistance of 30 Ohms; and 3) a protection resistance of 100 Ohms, one gets a total of 546 Ohms. Based upon this value, the SLIC is designed to cater to a loop resistance of 550 Ohms. Since the phone resistance can vary from 100 Ohms to 400 Ohms, the actual loop resistance can vary from almost 200 Ohms to 550 Ohms. Over this range of loop resistance, the battery feed source will remain in the CC region. The power consumption pattern and efficiency of the SLICs can be examined by looking at a simple current feed circuit model 20 illustrated in Figure 6 that will be applicable for most CCVL implementations. The power dissipated in the circuit 20 is dependent on: 1) supply voltage; 2) loop resistance; and 3) constant current value of loop current. The power dissipated in the circuit 20 during the off-hook constant current feed is estimated by the following equation:

$$P_D = 1.1 I_L V_{SS} - I_L^2 R_L \qquad\qquad (1)$$

Equation (1) can be rewritten as:

$$P_D = P_{CON} - P_{LOOP} \qquad (2)$$

where $I_L$ is the loop current, $R_L$ is the loop resistance (telephone plus cable, wiring and protection resistances), $P_{CON}$ is the power consumed from the supply voltage $V_{SS}$ and $1.1 I_L V_{SS}$, and $P_{LOOP}$ is the power delivered to the loop (i.e. the telephone and cable together) and $= I_L^2 R_L$. The factor of 1.1 is incorporated within $P_{CON}$ to account for bias currents and other miscellaneous current drains. The value of $V_{SS}$ is estimated as follows:

$$V_{SS} = \left( I_L R_{L(\max)} + 2 V_{DS(\min)} + \Delta \right), \qquad (3)$$

where $\Delta$ is the swing required for the largest speech signal on the line. This estimate of $V_{SS}$ is based on serving the largest value of $R_L$. Interestingly, for a given value of $I_L$ and $V_{SS}$, the power $P_D$ dissipated in the circuit 20 depends upon the loop current $I_L$ and the loop resistance $R_L$. With short loops, (small values of $R_L$) more power is dissipated in the circuit 20 and less in the loop. With long loops, (larger values of $R_L$) the loop power increases and the power dissipated in the circuit 20 decreases. The total power drawn from the battery ($P_{CON}$) remains constant and will not vary with loop resistance ($R_L$) since it depends only on $I_L$ and $V_{SS}$.

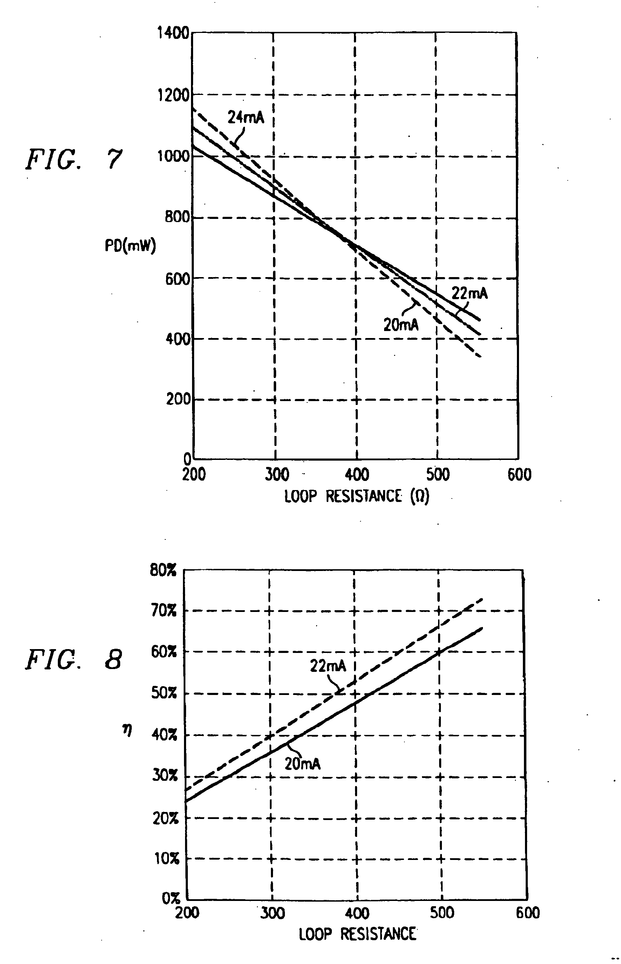

Equation (1), which is indicative of the dissipated power, and its variation with loop length for different loop currents is shown in Figure 7 (after multiplying by 4, for 4 lines being off-hook). This plot shows that at certain values of $R_L$, the power $P_D$ dissipated in the circuit 20 for 20mA current is actually higher than that for 24mA. This is, of course, due to the fact that the dissipated power $P_D$ drops off at the rate of $I_L^2$. The implication of this is that the battery feed can actually be more efficient at higher values of loop current at certain loop lengths. The foregoing equations can be used to estimate the efficiency of power feed and to demonstrate that the conventional method is grossly inefficient, as can be seen with reference to Figure 8, which shows that for a large range of loop resistances, the efficiency is actually below 50%.

The Cost of Wasted Power

Minimization of power consumption can be illustrated by choosing the lowest possible value of current, i.e. 20mA. Clearly, at this chosen loop current, the efficiency $\eta$ is very poor (56% at 400 Ohms, 44% at 300 Ohms, and just 31% at 200 Ohms). A low-power phone drops a small voltage and would present a lower resistance (say 300 Ohms or 200 Ohms) to the loop and will therefore consume less power. Although the phone consumes less power however, the power consumed by the SLIC remains the same. This is because the power not utilized by the phone is dissipated by the SLIC.

In order to benefit from the reduced power consumption of the loop (phone or any other component such as lower wiring resistance, etc.), a constant efficiency battery feed mechanism is required. This essentially means that is less power is to be delivered, then less power is actually consumed. This property is inherent in DC-DC converters or switched-mode power conversion. The benefits of such a power feed method can be examined by assuming that one can achieve, for example, a constant efficiency $\eta$ of about 85%. Many DC-DC converters such as the model TPS5102 commercially available from Texas Instruments Incorporated of Dallas, Texas, can achieve however, efficiencies of more than 90%. The cost benefits are shown in Table 1 below that illustrates savings in power and cost by using a DC-DC converter to implement a constant efficiency batter feed mechanism.

Table 1

| Savings in power and cost by using a DC-DC converter | | | | | |
|---|---|---|---|---|---|
| Cost of wasted power | | | | | |
| RL | Ploop | Pcon | Pcon(DC-DC) | Psaved | $ Saved |
| 200 | 320 | 1232 | 376 | 856 | 17.11 |
| 225 | 360 | 1232 | 424 | 808 | 16.17 |
| 250 | 400 | 1232 | 471 | 761 | 15.23 |
| 275 | 440 | 1232 | 518 | 714 | 14.29 |

(continued)

| Savings in power and cost by using a DC-DC converter | | | | | |
|---|---|---|---|---|---|
| Cost of wasted power | | | | | |
| RL | Ploop | Pcon | Pcon(DC-DC) | Psaved | $ Saved |
| 300 | 480 | 1232 | 565 | 667 | 13.35 |
| 325 | 520 | 1232 | 612 | 620 | 12.40 |
| 350 | 560 | 1232 | 659 | 573 | 11.46 |
| 375 | 600 | 1232 | 706 | 526 | 10.52 |
| 400 | 640 | 1232 | 753 | 479 | 9.58 |
| 425 | 680 | 1232 | 800 | 432 | 8.64 |
| 450 | 720 | 1232 | 847 | 385 | 7.70 |
| 475 | 760 | 1232 | 894 | 338 | 6.76 |
| 500 | 800 | 1232 | 941 | 291 | 5.82 |
| 525 | 840 | 1232 | 988 | 244 | 4.88 |
| 550 | 880 | 1232 | 1035 | 197 | 3.93 |

The power levels depicted in Table 1 above can be seen plotted in Figure 9 in which it becomes apparent that the advantage gained is dependent on the loop length. In any case, the DC-DC converter method is always more efficient.

In the subscriber loop, as stated herein before, the loop current has a DC as well as an AC component. The DC component (DC loop current) performs the function of delivering power to the telephone. The AC component is the speech signal. The power levels however, are vastly different. The DC power is a few hundred milliwatts whereas the AC power is just a few milliwatts. Hence, if one intends to make power feed efficient, then it is the DC current feed which must be made efficient. At the same time, such an implementation must not disturb the performance of the AC voice band signals. This can be achieved by having two current sources in parallel as shown in Figure 10, wherein the DC current source 22 preferably has high efficiency ($\eta$) between 85% and 90% as well as a high impedance in the voice band. The AC current source 24 synthesizes a 600 Ohm (typical) termination and accommodates the high fidelity speech transmit and receive functions (hybrid functions). The DC current source 22 is then optimized for efficiency while the AC current source 24 is optimized for fidelity (voice band performance). In view of the foregoing, the DC current source 22 is most preferably implemented using switched-mode techniques.

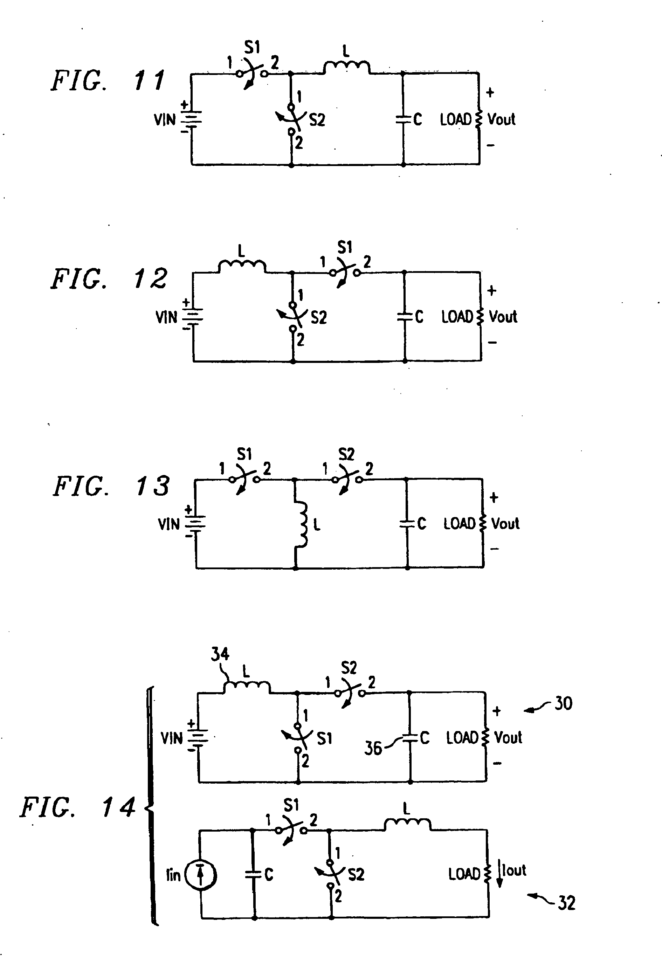

The basic structures of switched-mode converters disclosed in the literature are directed to voltage converters including 1) BUCK, illustrated in Figure 11, where the output voltage is always less than the input voltage; 2) BOOST, illustrated in Figure 12, where the output voltage is always greater than the input voltage; and 3) BUCK-BOOST, illustrated in Figure 13, where the output voltage can be less than or greater than the input voltage. None of these basic circuit topologies is suitable for implementing the desired constant DC current source for two reasons: First, they are constant voltage sources, and second (and more important), they all have a large capacitor at the output which will present a low impedance to voice band signals. Two switched-mode schemes including the dual of the voltage BOOST converter and the switched-mode voltage-to-current trans-converter, can however, be implemented to achieve the desired high efficiency while presenting a high impedance to the voice band signals.

The dual of the voltage BOOST converter can be arrived at by converting one of the basic topologies depicted in Figures 11-13 into its respective "DUAL." The "DUAL" of a circuit topology is like a "mirror image", and is generally arrived at by: 1) replacing an inductor by a capacitor and vice-versa; and 2) replacing a current source by a voltage source and vice-versa; and 3) replacing a series element by the dual of the same element in shunt; and 4) replacing a shunt element by the dual of the same element in series; and 5) replacing a closed switch by an open switch and vice-versa. Once these transformations are complete, it will be found that the current equations (or waveforms) of the dual are like the voltage equations (or waveforms) or the original. This can be exemplified with reference now to Figure 14 that depicts a voltage boost converter 30 and its dual (current boost converter) 32 that is obtained by applying the rules of duality set forth above. It can be seen that since there is a series inductor 34 at the output, there is a possibility of achieving a high impedance in the voice band. (This is achieved not simply by virtue of the impedance of the inductor, but also by the feedback that maintains a constant current.)

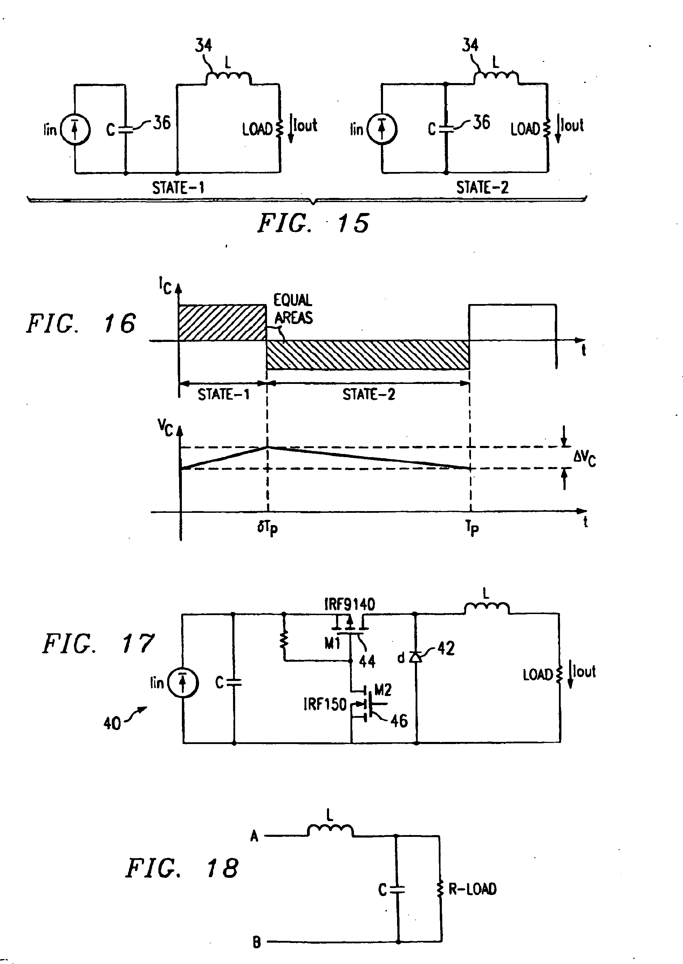

A first order analysis of converter 30 can be implemented, for example, by assuming 1) in the steady-state, there is no net build-up or no net loss of energy in the inductor 34 and the capacitor 36; and 2) the inductor 34 is large enough to have a very low (~1%) current ripple. The converter 30 has two distinct states including State-1 in which switch S1 is open and switch S2 is closed, and State-2 in which switch S1 is closed and switch S2 is open. The equivalent circuits corresponding to these two states are depicted in Figure 15. The analysis also assumes the duty cycle of the switching is $\delta$ and the time period is $T_P$. State-1 therefore, lasts for $\delta T_P$ seconds and State-2 lasts for $(1-\delta)$ $T_P$ seconds. In State-1, the capacitor 36 is being charged by the input current and the voltage build-up is given by:

$$C * \Delta V_{C1} = I_{IN} * \delta T_P , \qquad (4)$$

which can be rewritten as

$$\Delta V_{C1} = (I_{IN} * \delta T_P) / C \qquad (5)$$

Since $\Delta V_{C1}$ is positive, the capacitor 36 energy increases. In State-2, because of the steady-state assumption, the capacitor 36 energy therefore must decrease. $\Delta V_{C2}$ must therefore be negative. This means that the net current must flow out of the capacitor 36, and the voltage discharge is given by:

$$C * \Delta V_{C2} = (I_{IN} - I_{OUT}) * (1 - \delta)T_P \qquad (6)$$

since $\Delta V_{C2} < 0$.

$I_{OUT}$ therefore is greater than $I_{IN}$, which proves the BOOST operation of the current source. Moreover, the magnitude of $\Delta V_{C1}$ is equal to the magnitude of $\Delta V_{C2}$, which means

$$(I_{IN} * \delta T_P) = (I_{OUT} - I_{IN}) * (1 - \delta)T_P \qquad (7)$$

which can be rewritten as

$$\delta I_{IN} = I_{OUT}(1 - \delta) - I_{IN} + \delta I_{IN} , \qquad (8)$$

and therefore

$$I_{OUT} = I_{IN} / (1 - \delta) \qquad (9)$$

The waveforms of the current boost converter (CBC) are very similar to the waveforms generated by the voltage boost converter (VBC) in that the capacitor voltage waveform in the CBC is like the inductor current waveform in the VBC. Further, the inductor current in the VBC has equal +Ve and -Ve areas, while the capacitor voltage in the CBC has equal +Ve and -Ve areas. Capacitor current and voltage waveforms for the current boost converter are shown in Figure 16 for a $\delta$=0.33 or a boost ratio of 1.5.

One preferred embodiment of a current boost circuit 40 is shown in Figure 17. In voltage converters, one of the switches is usually a diode so as to simplify the control. Switch S2 then, is simply a fast recovery diode 42 that will turn off whenever switch S1 (transistor M1) 44 is turned on. The percentage of time for which the converter 40 is in State-1 is designated $\delta$, as stated herein before. This is the state in which S1 (transistor M1) 44 is off. The transistor M2 (46) is used to control transistor M1 (44). The driving signal for transistor M2 (46) should therefore have a duty cycle of $(1-\delta)$. It can be appreciated that the $\delta$ has to be dynamically varied to keep the output current constant. This is easily achieved by using any industry standard PWM controller such as the TPS5102 or the TPS6734 commercially available from Texas Instruments Incorporated of Dallas, Texas.

The current boost converter shown in Figure 17 discussed herein above is efficient provided there is a current source available. The primary power source however, is almost always a voltage source and not a current source. In these instances, the input current source needs to be constructed from a voltage source. This is generally done with a linear element such as an op-amp or a transistor (operating in its linear region). The overall efficiency of a system using such a scheme will be the product of the efficiencies of the voltage-to-current converter (linear) and the current-to-current converter (switched-mode); and since the individual efficiencies are always less than 100%, the resultant efficiency will be less than the lower of the two efficiencies. If the basic current source, for example, has a $\eta1=50\%$ (which is good for a linear block), and the switched-mode current source has a $\eta2=90\%$, then $\eta$overall=0.5x0.9=0.45 or 45%. There then must be an efficient method of converting voltage to current to overcome this system deficiency. One preferred embodiment for converting voltage to current employs a switched-mode voltage-to-current trans-converter. Operating principles of the switched-mode voltage-to-current trans-converter can be understood by first exploring the operating principles of a switched-mode current-to-voltage trans-converter. This trans-conversion is implemented by exploiting the well-known basic properties of the capacitor and the inductor as circuit elements in which $V = L\dfrac{dI}{dt}$ and $I = C\dfrac{dV}{dt}$. Using

these basic relationships, one can derive a voltage source from a current source and vice-versa, using only switched-mode techniques. This approach will ensure that a minimum of power is lost and that $\eta$ is maximized.

Current-to-voltage trans-conversion is first explored by assuming the relationship

$$I = C\frac{dV}{dt} \quad \text{or} \quad V_C(t) = \frac{1}{C}\int_0^t i(t^*)dt^* \quad \text{is used to convert current into voltage by accumulating}$$

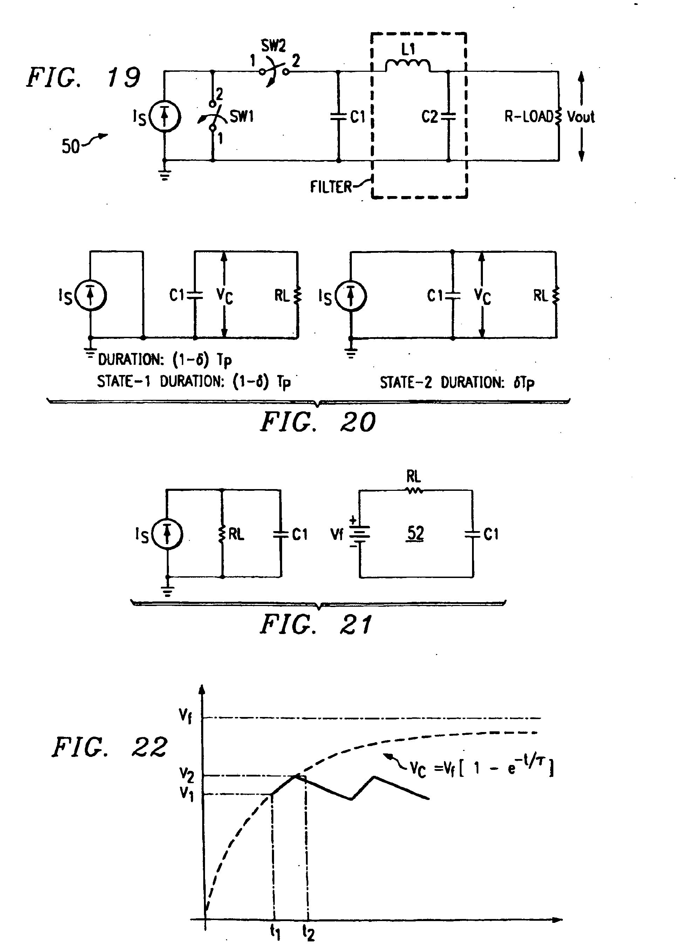

(or integrating) the current flowing into a capacitor. The load needs a constant voltage, and hence, one can insert an LC filter such as shown in Figure 18, before the load to smoothen out any voltage fluctuations. A fluctuating voltage applied across points "A" and "B" in Figure 18 will therefore appear filtered across $R_{LOAD}$. If a current source is periodically switched onto a capacitor to create a fluctuating voltage, it can then be filtered using an LC filter such as depicted in Figure 18. One such filtered current source is shown in Figure 19 that illustrates a simplified switched-mode current-to-voltage transconverter 50. Here, a capacitor C1 has been placed along with two switches, SW1 and SW2, to integrate the current and convert it into a fluctuating voltage that is later filtered by the filter of Figure 18 (formed by L1 and C2). It can be appreciated that the capacitor C1 is used to perform the actual current-to-voltage conversion while the capacitor C2 is part of the LC filter. The trans-converter 50 operates the switches, SW1 and SW2, alternately and in complimentary fashion (i.e. when one is on, the other is off). This can be represented as two states as shown in Figure 20. There is a build-up of voltage on the capacitor C1 in State-2, and a decrease in voltage on the capacitor C1 in State-1. The duty cycle can be so adjusted (i.e. using an error amplifier and a PWM controller familiar to those skilled in the art) such that the voltage on the load remains constant regardless of the value of $R_{LOAD}$.

Analysis of the switched-mode trans-converter 50 is better understood by recognizing the function of the LC filter is merely to filter out the voltage ripple on the capacitor and that it does not play any role in the current-to-voltage conversion. This is ensured by making the cut-off frequency of the LC filter much smaller than the switching frequency. Thus, to analyze the trans-converter 50, it is convenient to ignore the LC filter. In State-1, the capacitor C1 supplies the load current. This causes the voltage on it to droop by an amount $\Delta V_C$. In State-2, the capacitor C1 charges up by the same amount (assuming a steady-state condition where there is neither a net increase nor a net decrease of energy). Since the voltage on a capacitor represents a stored energy, the change in voltage by an amount $\Delta V_C$ also represents a change in energy $\Delta E_C$. When considering a capacitor that is charging from a voltage $V_1$ to a voltage $V_2$, for example, such that $V_2 = (V_1 + \Delta V_C)$, the corresponding change in energy is:

$$\Delta E_C = \frac{1}{2}C\left[(V_1 + \Delta V_C)^2 - V_1^2\right] \tag{10}$$

Assuming further a low-ripple condition where $V_1 >> \Delta V_C$, the change in energy can be written as:

$$\Delta E_C = CV_O\Delta V_C , \tag{11}$$

where $V_O$ is the average output voltage and $\cong V_1, V_2$. The term $\Delta E_C$ represents both the increase in energy in State-2 as well as the decrease in energy in State-1. In State-1, for a duration $(1-\delta)T_F$, the resistor $R_L$ dissipates an energy $E_R$; and this energy has to come from the capacitor C1 since the source has been disconnected. The equation for this energy can be written as:

$$E_R = \frac{(V_o)^2}{R_L}(1-\delta)T_P = \Delta E_C = CV_o\Delta V_C \;, \qquad (12)$$

and therefore,

$$V_o(1-\delta)T_P = R_L C \Delta V_C \;. \qquad (13)$$

The voltage ripple $\Delta V_C$ can be estimated by considering the Thevenin equivalent circuit as shown by Figure 21, when the capacitor is being charged by the current source $I_S$ in State-2. With reference now to the Thevenin equivalent circuit 52 depicted in Figure 21, the capacitor voltage can be written as:

$$V_C = V_f\left[1 - e^{-t/\tau}\right] \;, \qquad (14)$$

where $V_f = I_S R_L$. An estimate of the ripple $\Delta V_C$, or the amount by which the capacitor C1 charges up in the interval $\delta T_P$ can be made by assuming that the capacitor C1 charges from $v_1$ at $t_1$ to $v_2$ at $t_2$ such as illustrated in Figure 22. The ripple can then be estimated by recognizing

$$\Delta V_C = \frac{dV_C}{dt}\Delta t \;, $$

and since

$$\frac{dV_C}{dt} = \frac{V_f}{\tau}e^{-t/\tau} \;, $$

$$\Delta V_C = \frac{V_f}{\tau}e^{-t/\tau}\Delta t \;. \qquad (15)$$

Evaluating equation (15) at $t=t_1$ and letting $\Delta t = \delta T_P$, $\tau = R_L C$, $V_f = I_S R_L$, and $V_1 = V_0$,

$$\Delta V_C = \frac{I_S R_L}{R_L C}\left[1 - \frac{V_o}{I_S R_L}\right]\delta T_P \;. \qquad (16)$$

Substituting equation (16) into equation (13), it can be shown that

$$V_O(1-\delta)T_P = R_L C \frac{I_S R_L}{R_L C}\left[1 - \frac{V_O}{I_S R_L}\right]\delta T_P \ ,$$

which after simplification yields

$$V_O(1-\delta) = I_S R_L\left[1 - \frac{V_O}{I_S R_L}\right]\delta \ ,$$

or

$$V_O = \delta I_S R_L \qquad\qquad (17)$$

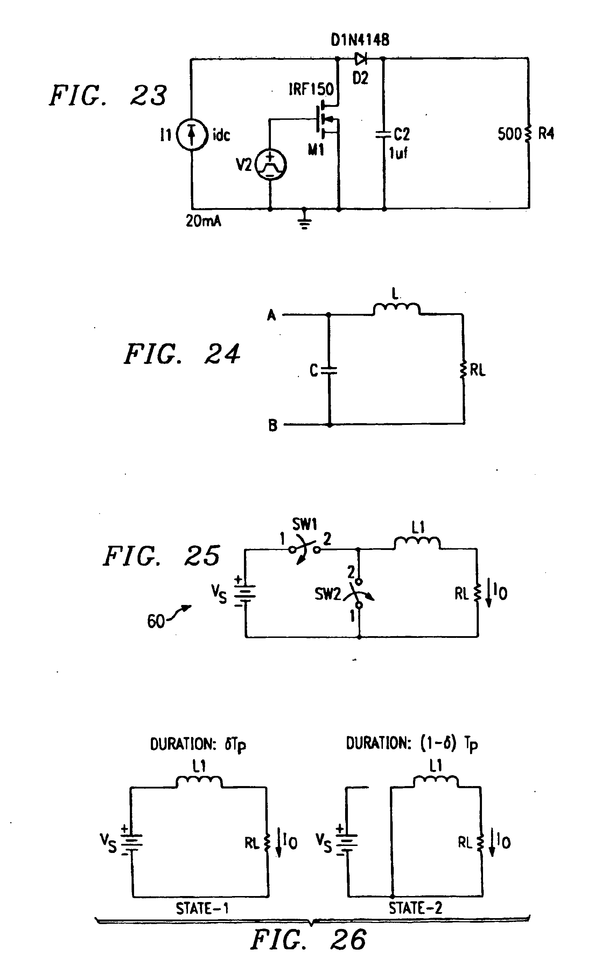

The relation shown by equation (17) can also be seen to be intuitively correct, since if the transconverter was continuously in State-2, i.e. $\delta=1$, then the capacitor C1 would charge to a steady-state voltage of $\boldsymbol{V_O}=\boldsymbol{I_S R_L}$. It can be appreciated that equation (17) must be corrected slightly due to the finite on voltage of the switches used in an actual application. One such actual application is illustrated in Figure 23 that depicts implementation of a switched-mode current-to-voltage trans-converter. In this implementation, the switch S1 is implemented by the transistor M1 and the switch S2 is implemented by the diode D2. Whenever the transistor M1 is turned on, the diode D2 will be reverse biased and hence in its off state. When the capacitor C2 is being charged by the current source $\boldsymbol{I_1}$ (20mA) however, the diode D2 will have a voltage drop of $\boldsymbol{V_\gamma}$=**0.65**v. The relationship shown by equation (17) can then be modified to also consider the voltage drop such that

$$V_O = \delta(I_S R_L - V_\gamma) \qquad\qquad (18)$$

Ripple is another dimensionless quantity that can be defined as a fraction of the output voltage, and can be written as

$$N_{RIP} = \frac{\Delta V_C}{V_O} = \frac{(1-\delta)T_P}{R_L C} = \frac{(1-\delta)T_P}{\tau_{RC}} \ . \qquad\qquad (19)$$

As can be (intuitively) seen, the larger the time constant as compared to the time interval of State-1 during which the capacitor voltage begins to droop, the lower the ripple. Performance of the "DUAL" of the trans-converter shown in Figure 23 is herein below compared with the trans-converter shown in Figure 23 itself, using the dimensionless ripple quantity discussed above. The present inventor found that equation (18) above closely matched actual circuit simulation results, except in cases where $\delta$ is small, since the diode D2 drop would also change. Table 2 illustrates the comparison.

Table 2

| $\delta$ | $V_0$ using Eq (18) | $V_0$ from simulation | Error |
|---|---|---|---|
| 0.2 | 1.87 | 1.78 | -5.06% |
| 0.5 | 4.675 | 4.64 | -0.75% |
| 0.7 | 6.55 | 6.57 | 0.30% |
| 0.8 | 7.48 | 7.53 | 0.66% |
| 0.9 | 8.42 | 8.48 | 0.71% |

Since most power sources are voltage sources, and because what is needed on the subscriber loop is a constant current source, it is more useful to have a voltage-to-current trans-converter. Such a trans-converter can be a dual of the current-to-voltage trans-converter that was described herein before with reference to Figures 18-23. It can easily be ascertained that because of the "duality" principle, all equations and waveforms are similar to that of the current-to-voltage trans-converter. Analysis of the switched-mode voltage-to-current trans-converter can be accomplished by first considering the relationship $V = L\dfrac{dI}{dt}$ or $i_L(t) = \dfrac{1}{L}\displaystyle\int_0^t v(t^*)dt^*$ , which is integrating the voltage across an inductor. Just as a capacitor may have a voltage ripple (fluctuating voltage), an inductor may have a current ripple (fluctuating current). This current ripple can be filtered by the dual of the filter shown in Figure 18, and which is illustrated in Figure 24. If a fluctuating current source is applied between points "A" and "B" in Figure 24, the current through the load $R_L$ will be filtered. In similar fashion, a basic voltage-to-current trans-converter can be implemented using the dual of the circuit shown in Figure 19, such as illustrated in Figure 25 that depicts a switched-mode voltage-to-current trans-converter 60.

The trans-converter 60 shown in Figure 25 operates the switches SW1 and SW2 alternately and in complimentary fashion (when one is on, the other is off). This can be represented as two states as shown in Figure 26. There is a build-up of current in the inductor L1 in State-2 and a decrease in the inductor L1 current in State-1. The duty cycle can be adjusted (with an error amplifier and a PWM controller well known in the art) so that the current through the load $R_L$ remains constant regardless of the value of $R_L$.

The function of the LC filter shown in Figure 24 is merely to filter out the current ripple of the inductor; and it does not play any role in the current-to-voltage conversion. This is ensured by making the cut-off frequency of the LC filter much smaller than the switching frequency. The LC filter is therefore not shown in Figure 26 since it need not be considered in the analysis.

With continued reference now to Figure 26, the inductor supplies the load current $I_O$ in State-2. This causes the current through the inductor to droop by an amount $\Delta I_L$. In State-1, the inductor current builds up by the same amount (assuming a steady-state condition where there is neither a net increase nor a net decrease of energy). Since the current through the inductor represents a stored energy, the change in current through the inductor represents a stored energy. A change in the inductor current by an amount $\Delta I_L$ also then represents a change in energy by an amount $\Delta E_L$. This can be exemplified by considering an inductor having a current the builds up from $I_1$ to a value $I_2$ such that $I_2 = (I_1 + \Delta I_L)$. The corresponding change in energy is then:

$$\Delta E_L = \frac{1}{2}L\left[(I_1 + \Delta I_L)^2 - I_1^2\right]. \qquad (20)$$

If it is further assumed a low-ripple condition exists, where $I_1 \gg \Delta I_L$, the change in energy can be approximated as

$$\Delta E_L = L I_O \Delta I_L , \qquad (21)$$

where $I_O$ is the average output current and $\cong I_1, I_2$. The $\Delta E_L$ term represents both and increase in energy in State-1 as well as a decrease in energy in State-2. In State-2, for a duration $(1-\delta)T_P$, the resistor $R_L$ dissipate an energy $E_R$ that must be provided by the inductor since the source has been disconnected. It can then be shown that

$$E_R = (I_O)^2 R_L (1 - \delta) T_P = \Delta E_L = L I_O \Delta I_L , \qquad (22)$$

which can be modified to show

$$I_O R_L (1 - \delta) T_P = L \Delta I_L . \qquad (23)$$

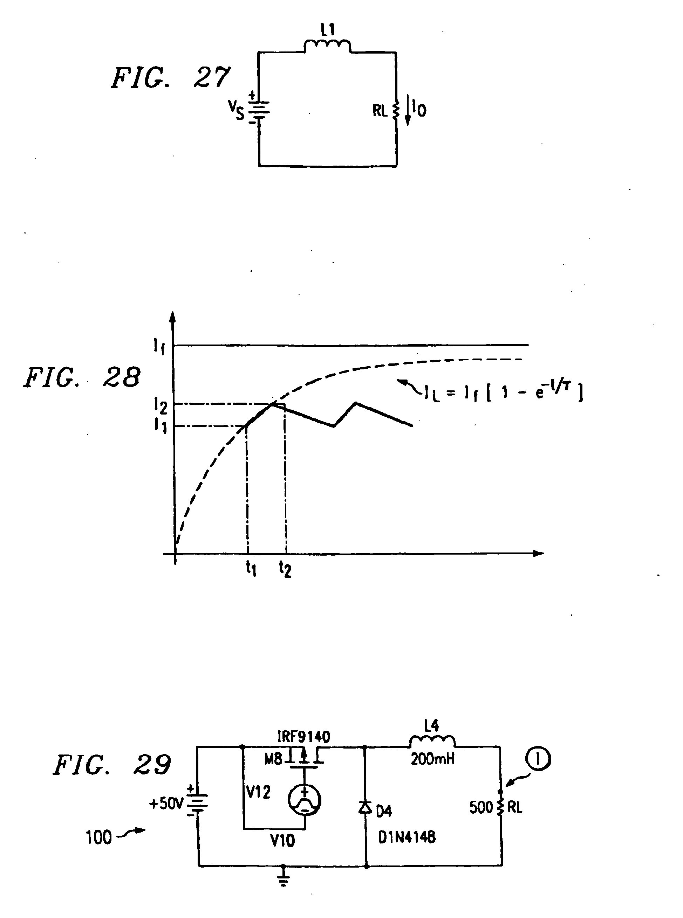

The current ripple $\Delta I_L$ can be estimated by considering the equivalent circuit illustrated in Figure 27 that depicts the inductor being charged by a voltage source in State-1. The inductor current can be written as:

$I_L = I_f[1 - e^{-t/\tau}]$, where $I_f = \dfrac{V_S}{R_L}$. An estimate of the current ripple $\Delta I_L$ (amount by which the inductor charges up in the interval $\delta T_P$) can be made by assuming that the inductor charges from current $I_1$ at time $t_1$ to current $I_2$ at time $t_2$, as shown in Figure 28 that depicts the inductor current waveform caused by charging of the inductor by the voltage source in State-1. Using the foregoing assumption, the current ripple $\Delta I_L$ can now be estimated by recognizing that

$$\Delta I_L = \frac{dI_L}{dt}\Delta t \ ;$$

and since

$$\frac{dI_L}{dt} = \frac{I_f}{\tau_{RL}}e^{-t/\tau} \ ,$$

$$\Delta I_L = \frac{I_f}{\tau_{RL}}e^{-t/\tau}\Delta t \ . \tag{24}$$

Evaluating equation (24) at $t = t_1$, and letting $\Delta t = \delta T_P$, $\tau_{RL} = \dfrac{L}{R_L}$, $I_f = \dfrac{V_S}{R_L}$, and $I_1 = I_O$,

$$\Delta I_L = \frac{V_S}{L}\left[1 - \frac{I_O R_L}{V_S}\right]\delta T_P \ . \tag{25}$$

Substituting equation (25) into equation (23) provides

$$I_O R_L(1 - \delta)T_P = L\frac{V_S}{L}\left[1 - \frac{I_O R_L}{V_S}\right]\delta T_P \ ,$$

which after simplification, yields:

$$I_O R_L(1 - \delta) = V_S\left[1 - \frac{I_O R_L}{V_S}\right]\delta \ . \tag{26}$$

Rearranging equation (26) finally yields:

$$Io = \delta \frac{V_S}{R_L} \; . \tag{27}$$

It can be readily appreciated the relation shown by equation (27) is intuitively correct, since if the circuit shown in Figure 27 were continuously in State-1, i.e. $\delta=1$, then the inductor would charge to a steady-state current of

$I_O = I_f = Io = I_f = \dfrac{V_S}{R_L} \; .$   The relation specified by equation 27 must be corrected slightly in an actual switched-mode voltage-to-current trans-converter 100 implementation such as illustrated in Figure 29, due to the finite on voltage of the switches employed. In this case, it is the on voltage of the transistor M8 that will reduce the effective value of $V_S$ such that

$$I_f = \frac{V_S - V_{DS(ON)}}{R_L} \; . \tag{28}$$

Hence,

$$Io = \delta \left[ \frac{V_S - V_{DS(ON)}}{R_L} \right] , \tag{29}$$

The dimensionless quantity $N_{RIP}$, which is the ripple expressed as a fraction of the output voltage in the instant case, can be expressed as:

$$N_{RIP} = \frac{\Delta I_L}{Io} = \frac{R_L(1 - \delta)T_P}{L} = \frac{(1 - \delta)T_P}{\tau_{RL}} \; . \tag{30}$$

In view of the foregoing, it can be (intuitively) seen, the larger the time constant as compared to the time interval of State-2 during which the inductor current begins to droop, the lower the ripple. Implementing the voltage-to-current trans-converter 100 shown in Figure 29 produces notable differences over current-to-voltage trans-converter implementation discussed herein before with reference to Figures 18-23. Since it is more difficult, for example, to obtain a high value of inductance, it is better to permit a larger value of $N_{RIP}$ and allow the filter to remove the ripple. Further, it may be difficult to get the transistor M8 to turn on/off fast enough with a highly inductive load. It is better in this case therefore, to operate at lower frequencies in order to keep the drive circuit simple. The present inventor found output current results provided by equation (29) to provide nearly identical results from a simulated implementation of the voltage-to-current trans-converter shown in Figure 29 in cases where $\delta$ is small since the condition of $\tau_{RL} >> (1-\delta)T_P$ is more difficult to achieve. The comparison is shown in Table 3 below.

Table 3

| $\delta$ | $I_O$(calculated) | $I_O$(simulated) | Error |
|---|---|---|---|
| 0.1 | 10 | 11.64 | 16.40% |
| 0.2 | 20 | 20.51 | 2.55% |
| 0.3 | 30 | 30.06 | 0.20% |
| 0.4 | 40 | 39.85 | -0.37% |
| 0.5 | 50 | 49.68 | -0.64% |
| 0.6 | 60 | 59.73 | -0.45% |
| 0.8 | 80 | 79.99 | -0.01% |
| 0.9 | 90 | 90.01 | -0.01% |

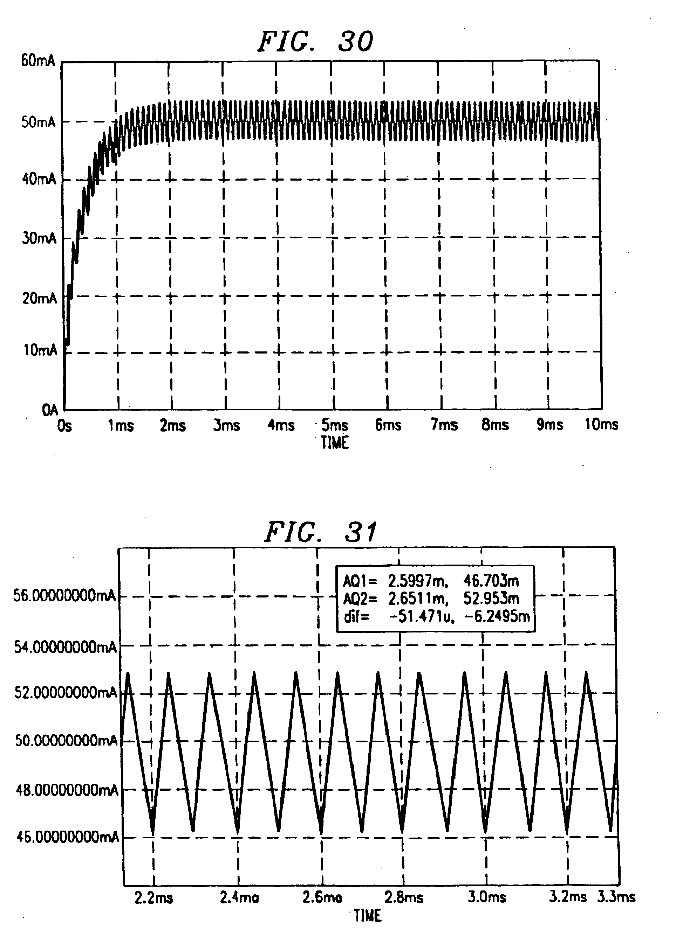

Figure 30 depicts a current waveform (*Io*) with δ=0.5 for a simulated implementation of the voltage-to-current trans-converter 100 shown in Figure 29; while Figure 31 depicts a current ripple waveform Δ*Io* with δ=0.5 for the simulated implementation of the voltage-to-current trans-converter 100 shown in Figure 29.

In view of the above, it can be seen the present invention presents a significant advancement in the art of switched-mode current feed techniques for subscriber loops employed in telephony applications. Further, this invention has been described in considerable detail in order to provide those skilled in the data communication art with the information needed to apply the novel principles and to construct and use such specialized components as are required. In view of the foregoing descriptions, it should further be apparent that the present invention represents a significant departure from the prior art in construction and operation. However, while particular embodiments of the present invention have been described herein in detail, it is to be understood that various alterations, modifications and substitutions can be made therein without departing from the scope of the present invention, as defined in the claims which follow. For example, although various embodiments have been presented herein with reference to particular transistor types, the present inventive structures and characteristics are not necessarily limited to particular transistor types or sets of characteristics as used herein. It shall be understood the embodiments described herein above can easily be implemented using many diverse transistor types so long as the combinations achieve a low power SLIC according to the inventive principles set forth herein above.

**Claims**

1.  A switched-mode current boost converter (32) comprising:

    at least one capacitor;
    at least one output series inductor;
    a first switch; and
    a second switch,

    wherein the first and second switches are responsive to a dynamically time varied input signal to switch alternately and in complementary fashion to implement a first state and a second state such that the at least one capacitor is caused to be charged by a current source while in the first state and to be discharging via the at least one output series inductor while in the second state to generate the constant DC current feed;
    wherein the first switch is operational in response to the dynamically time varied input signal to cause the switched-mode current boost converter to switch between its first and second states to maintain a constant DC output current; and
    wherein the inductor is operational to achieve a high impedance in a subscriber line voice band, and the inductor has an inductance that is sufficient to limit converter output current ripple to less than about one percent.

2.  A switched-mode current boost converter (40) according to claim 1 wherein the first switch comprises a CMOS transistor (44).

3.  A switched-mode current boost converter (40) according to claim 2 wherein the second switch comprises a fast response diode (42) that is operational to switch alternately and in complimentary fashion with the CMOS transistor (44) in response to the dynamically time varied input signal.

4.  A switched-mode current boost converter according to any one of claims 1 to 3, wherein the dynamically time varied input signal is generated via a pulse width modulated controller.

5.  A subscriber loop interface circuit comprising:

    means for synthesizing a subscriber line termination impedance and further for implementing high fidelity speech transmit and receiving functions; and
    a switched-mode current boost converter according to any one of claims 1 to 4 for presenting a high impedance to subscriber line voice band signals, wherein the generating means has an efficiency of at least 80%.

6.  A subscriber loop interface circuit as claimed in claim 5, wherein the means for synthesizing a subscriber line termination impedance and further for implementing high fidelity speech transmit and receiving functions, comprises an AC current source configured to synthesize a desired impedance termination.

7.  A subscriber device for transmitting voice frequencies, comprising:

    a telephonic device; and
    a subscriber loop interface circuit for connection to a remote central office (CO) according to any claim 5 or 6, wherein means for generating a subscriber line constant DC current, is configured to provide power to said telephonic device.

8.  A method of generating a subscriber line constant DC current feed comprising the steps of:

    providing a dynamically time variable input signal;
    providing a switched-mode current boost converter having a charging/discharging capacitor and further having a series output inductor coupled to the subscriber line;
    charging the capacitor via a current source for a first time period in response to a dynamically time variable input signal; and
    discharging the capacitor via the series output inductor for a second time period in response to the dynamically time variable input signal such that there is neither a net increase nor a net decrease of energy in the inductor and the capacitor, and further to generate a constant DC output current to the subscriber line, wherein the DC output current has a magnitude that is greater than the source current that is operative to charge the capacitor, and

    wherein the inductor is operational to achieve a high impedance in a subscriber line voice band, and the inductor has an inductance that is sufficient to limit converter output current ripple to less than about one percent.

**Patentansprüche**

1.  Schaltstrom-Aufwärtswandler (32) mit:

    wenigstens einem Kondensator,
    wenigstens einer Ausgangsreihendrosselspule,
    einem ersten Schalter und
    einem zweiten Schalter,
    wobei der erste und der zweite Schalter so auf ein dynamisch zeitvariiertes Eingangssignal ansprechen, dass sie abwechselnd und in komplementärer Weise schalten, um einen ersten Zustand und einen zweiten Zustand so auszuführen, dass bewirkt wird, dass der wenigstens eine Kondensator während des ersten Zustandes von einer Stromquelle geladen wird und sich während des zweiten Zustandes über die wenigstens eine Ausgangsreihendrosselspule entlädt, um die konstante Gleichstromzufuhr zu erzeugen,
    wobei der erste Schalter ansprechend auf das dynamisch zeitvariierte Eingangssignal so betrieben wird, dass er den Schaltstrom-Aufwärtswandler veranlasst, zwischen seinem ersten und seinem zweiten Zustand umzuschalten, um einen konstanten Ausgangsgleichstrom aufrechtzuerhalten, und
    wobei die Drosselspule so wirkt, dass sie eine hohe Impedanz in einem Teilnehmerleitungssprachband erzielt, und die Drosselspule eine Induktivität hat, die zur Begrenzung der Wandlerausgangsstromwelligkeit auf weniger als etwa ein Prozent ausreichend ist.

2.  Schaltstrom-Aufwärtswandler (40) nach Anspruch 1, bei dem der erste Schalter einen CMOS-Transistor (44) umfasst.

3.  Schaltstrom-Aufwärtswandler (40) nach Anspruch 2, bei dem der zweite Schalter eine schnell ansprechende Diode (42) umfasst, die so betrieben wird, dass sie ansprechend auf das dynamisch zeitvariierte Eingangssignal abwechselnd und in komplementärer Weise mit dem CMOS-Transistor (44) schaltet.

4.  Schaltstrom-Aufwärtswandler nach einem der Ansprüche 1 bis 3, bei dem das dynamisch zeitvariierte Eingangssignal über eine impulsbreitenmodulierte Steuereinheit erzeugt wird.

5.  Teilnehmerschleifenschnittstellenschaltung mit:

    einer Einrichtung zur Synthetisierung eines Teilnehmerleitungsabschlusswiderstands und ferner zur Ausführung von Sprachübertragungs- und -empfangsfunktionen mit hoher Wiedergabetreue, und
    einem Schaltstrom-Aufwärtswandler nach einem der Ansprüche 1 bis 4, um eine hohe Impedanz für Teilnehmerleitungssprachbandsignale zu bieten, wobei die Erzeugungseinrichtung einen Wirkungsgrad von mindestens 80% hat.

**6.** Teilnehmerschleifenschnittstellenschaltung nach Anspruch 5, bei der die Einrichtung zur Synthetisierung eines Teilnehmerleitungsabschlusswiderstands und ferner zur Ausführung von Sprachübertragungs- und -empfangsfunktionen mit hoher Wiedergabetreue eine Wechselstromquelle umfasst, die so ausgeführt ist, dass sie einen gewünschten Widerstandsabschluss synthetisiert.

**7.** Teilnehmervorrichtung zur Übertragung von Sprachfrequenzen, mit:

einem Fernsprechgerät und
einer Teilnehmerschleifenschnittstellenschaltung zur Verbindung mit einer fernen Vermittlungsstelle (CO) nach einem der Ansprüche 5 oder 6,
wobei eine Einrichtung zur Erzeugung eines konstanten Gleichstroms für eine Teilnehmerleitung so ausgeführt ist, dass sie das Fernsprechgerät mit Strom versorgt.

**8.** Verfahren zur Erzeugung einer konstanten Gleichstromzufuhr für eine Teilnehmerleitung, mit den Schritten, bei denen:

ein dynamisch zeitvariables Eingangssignal bereitgestellt wird,
ein Schaltstrom-Aufwärtswandler mit einem Lade-/Entladekondensator und ferner mit einer mit der Teilnehmerleitung gekoppelten Reihenausgangsdrosselspule bereitgestellt wird,
der Kondensator als Reaktion auf ein dynamisch zeitvariables Eingangssignal eine erste Zeitdauer lang über eine Stromquelle aufgeladen wird, und
der Kondensator als Reaktion auf das dynamisch zeitvariable Eingangssignal eine zweite Zeitdauer lang über die Reihenausgangsdrosselspule so entladen wird, dass weder ein Nettoenergieanstieg noch eine Nettoenergieabnahme in der Drosselspule und im Kondensator vorliegt, und ferner zur Erzeugung eines konstanten Ausgangsgleichstroms an die Teilnehmerleitung, wobei der Ausgangsgleichstrom einen Betrag aufweist, der größer als der zum Laden des Kondensators wirksame Quellenstrom ist, und
wobei die Drosselspule so wirkt, dass sie eine hohe Impedanz in einem Teilnehmerleitungssprachband erzielt, und die Drosselspule eine Induktivität hat, die zur Begrenzung der Wandlerausgangsstromwelligkeit auf weniger als etwa ein Prozent ausreichend ist.

**Revendications**

**1.** Convertisseur à amplification de courant à découpage (32) comprenant :

au moins un condensateur ;
au moins un inducteur série de sortie ;
un premier commutateur ; et
un second commutateur ;
dans lequel les premier et second commutateurs sont sensibles à un signal d'entrée qui varie dans le temps de manière dynamique afin de commuter de manière alternée et complémentaire, de façon à mettre en application un premier état et un second état de telle sorte que le ou les condensateurs soient chargés par une source de courant dans le premier état et déchargés par l'intermédiaire du ou des inducteurs série de sortie dans le second état de manière à générer l'alimentation en courant DC constant ;
dans lequel le premier commutateur est opérationnel, en réponse au signal d'entrée qui varie dans le temps de manière dynamique, de façon à faire commuter le convertisseur à amplification de courant à découpage entre ses premier et second états de manière à maintenir un courant de sortie DC constant ; et
dans lequel l'inducteur est opérationnel de façon à obtenir une impédance élevée dans une bande vocale de ligne d'abonné, et l'inducteur présente une inductance qui est suffisante pour limiter l'ondulation du courant de sortie du convertisseur à moins de un pour cent environ.

**2.** Convertisseur à amplification de courant à découpage (40) selon la revendication 1, dans lequel le premier commutateur comprend un transistor CMOS (44).

**3.** Convertisseur à amplification de courant à découpage (40) selon la revendication 2, dans lequel le second commutateur comprend une diode à réponse rapide (42) qui est opérationnelle de façon à commuter de manière alternée et complémentaire avec le transistor CMOS (44) en réponse au signal d'entrée qui varie dans le temps de manière dynamique.

**4.** Convertisseur à amplification de courant à découpage (32) selon l'une quelconque des revendications 1 à 3, dans lequel le signal d'entrée qui varie dans le temps de manière dynamique est généré par l'intermédiaire d'un contrôleur modulé en largeur d'impulsion.

**5.** Circuit d'interface de boucle d'abonné comprenant :

des moyens destinés à synthétiser une impédance de terminaison de ligne d'abonné et à mettre en outre en application des fonctions d'émission et de réception de la voix en haute fidélité ; et
un convertisseur à amplification de courant à découpage selon l'une quelconque des revendications 1 à 4, destiné à présenter une impédance élevée vis-à-vis des signaux de bande vocale de ligne d'abonné, dans lequel les moyens de génération présentent un rendement au moins égal à 80 %.

**6.** Circuit d'interface de boucle d'abonné selon la revendication 5, dans lequel les moyens destinés à synthétiser une impédance de terminaison de ligne d'abonné et à mettre en outre en application des fonctions d'émission et de réception de la voix en haute fidélité, comprennent une source de courant AC configurée de manière à synthétiser une impédance de terminaison souhaitée.

**7.** Dispositif d'abonné destiné à transmettre des fréquences vocales, comprenant :

un dispositif téléphonique ; et
un circuit d'interface de boucle d'abonné pour une connexion à un central téléphonique distant (CO) selon la revendication 5 ou la revendication 6 ;
dans lequel les moyens destinés à générer un courant DC constant de ligne d'abonné sont configurés de manière à fournir une alimentation électrique audit dispositif téléphonique.

**8.** Procédé destiné à générer une alimentation en courant DC constant de ligne d'abonné comprenant les étapes consistant à :

fournir un signal d'entrée qui varie dans le temps de manière dynamique ;
fournir un convertisseur à amplification de courant à découpage qui présente un condensateur de charge / de décharge et qui présente en outre un inducteur de sortie série couplé à la ligne d'abonné ;
charger le condensateur par l'intermédiaire d'une source de courant pendant une première période de temps en réponse au signal d'entrée qui varie dans le temps de manière dynamique ; et
décharger le condensateur par l'intermédiaire de l'inducteur de sortie série pendant une seconde période de temps en réponse au signal d'entrée qui varie dans le temps de manière dynamique de telle sorte qu'il n'y ait ni augmentation nette ni diminution nette d'énergie dans l'inducteur et le condensateur, et pour générer en outre un courant de sortie DC constant à la ligne d'abonné, dans lequel le courant de sortie DC présente une grandeur qui est plus grande que le courant de source qui est opérationnel afin de charger le condensateur ; et
dans lequel l'inducteur est opérationnel de façon à obtenir une impédance élevée dans une bande vocale de ligne d'abonné, et l'inducteur présente une inductance qui est suffisante pour limiter l'ondulation du courant de sortie du convertisseur à moins de un pour cent environ.

## FIG. 1

## FIG. 2

FIG. 3

FIG. 4

## FIG. 5

## FIG. 6

*FIG. 7*

*FIG. 8*

## FIG. 9

## FIG. 10

FIG. 11

FIG. 12

FIG. 13

FIG. 14

FIG. 15

STATE-1

STATE-2

FIG. 16

EQUAL AREAS

STATE-1 STATE-2

$\delta T_P$ $T_P$

$\Delta V_C$

FIG. 17

IRF9140

M1

44

IRF150

M2

46

d 42

40

L

LOAD Iout

FIG. 18

A

L

C

R-LOAD

B

*FIG. 19*

SW2

1 2

$I_S$

SW1

2

1

50

C1

L1

C2

R-LOAD Vout

FILTER

*FIG. 20*

$I_S$

C1 $V_C$ RL

DURATION: (1-δ) Tp

STATE-1 DURATION: (1-δ) Tp

$I_S$

C1 $V_C$ RL

STATE-2 DURATION: δTp

*FIG. 21*

$I_S$ RL C1

$V_f$ RL 52 C1

*FIG. 22*

$V_f$

$V_2$

$V_1$

$V_C = V_f [ 1 - e^{-t/\tau} ]$

$t_1$ $t_2$

FIG. 23

FIG. 24

FIG. 25

FIG. 26

FIG. 27

FIG. 28

$$I_L = I_f [ 1 - e^{-t/\tau} ]$$

FIG. 29

## FIG. 30

## FIG. 31

| AQ1= | 2.5997m, | 46.703m |
| AQ2= | 2.6511m, | 52.953m |
| dif= | −51.471u, | −6.2495m |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0450884 A